(19) Europäisches Patentamt
European Patent Office
Office européen des brevets

(11) **EP 4 113 824 B1**

(12) **EUROPEAN PATENT SPECIFICATION**

(45) Date of publication and mention
of the grant of the patent:
**30.10.2024 Bulletin 2024/44**

(21) Application number: **20921543.3**

(22) Date of filing: **25.11.2020**

(51) International Patent Classification (IPC):
*H02P 6/16* (2016.01)  *H02P 8/08* (2006.01)
*H02P 6/06* (2006.01)  *H04N 23/695* (2023.01)

(52) Cooperative Patent Classification (CPC):
**H02P 8/08; H02P 6/06; H02P 6/16; H04N 23/695**

(86) International application number:
**PCT/CN2020/131370**

(87) International publication number:
**WO 2021/169442 (02.09.2021 Gazette 2021/35)**

(54) **MONITORING DEVICE**

ÜBERWACHUNGSVORRICHTUNG

DISPOSITIF DE SURVEILLANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.02.2020 CN 202010113707**

(43) Date of publication of application:
**04.01.2023 Bulletin 2023/01**

(73) Proprietor: **Hangzhou Hikvision Digital
Technology Co., Ltd.
Hangzhou, Zhejiang 310051 (CN)**

(72) Inventors:
• **ZHANG, Hongzhen
Hangzhou, Zhejiang 310051 (CN)**
• **WANG, Yue
Hangzhou, Zhejiang 310051 (CN)**
• **WAN, Xin
Hangzhou, Zhejiang 310051 (CN)**
• **LIU, Kefeng
Hangzhou, Zhejiang 310051 (CN)**

(74) Representative: **Epping - Hermann - Fischer
Patentanwaltsgesellschaft mbH
Schloßschmidstraße 5
80639 München (DE)**

(56) References cited:
CA-C- 2 631 299        CN-A- 101 571 723
CN-A- 101 577 519      CN-A- 104 469 292
CN-A- 105 278 557      CN-A- 106 200 692
CN-A- 107 040 170      CN-A- 109 391 191
CN-U- 204 256 534      CN-Y- 201 247 414
JP-A- 2014 121 717     JP-A- H11 272 335
US-A1- 2019 058 427    US-A1- 2019 323 469
US-B2- 10 505 482

**Description**

The present application claims the priority to a Chinese patent application No.202010113707.9 filed with China National Intellectual Property Administration on February 24, 2020 and entitled "MONITORING DEVICE AND CAMERA".

**Technical field**

The present application relates to the technical field of video monitoring, and in particular to a monitoring device.

**Background**

In the field of video monitoring, a monitoring device with PT (Pan Tilt) control, such as a ball machine, is often used for monitoring. In order to accurately adjust the angle of the monitoring device and accurately control the monitoring device to acquire images or videos, it is necessary to control the motor motion of the monitoring device.

At present, a semi-closed loop control mode is mainly adopted by the monitoring device to control the motor motion. This leads to insufficient precision of initial position calibration of a stepping motor and insufficient control precision of the monitoring device over the body motion.

US2019323469A1 discloses an electric starter system including a brushless alternating current (AC) starter motor selectively coupled to an engine and having a rotor with a rotor position. A position sensor generates measured position signals indicative of rotor position. A controller is in communication with the sensor. The controller has sensorless logic for generating an estimated rotor position. The controller executes a method in which, below a threshold speed of the starter motor, the controller calibrates the sensorless logic using the measured position signals and controls a torque operation of the starter motor using the measured position signals. Above the threshold speed, the torque operation is controlled solely using the estimated rotor position.

CN101571723B discloses a high-precision drive and control integration motor which comprises a power supply interface, wherein a load position detection sensor, a reducer, a motor, a motor rotor position detection sensor, and a debugging interface which is connected with a drive and a controller are integrated with a site bus interface, two sides of the motor are respectively coaxially connected with the motor rotor position detection sensor and the reducer, the load position detection sensor and the load are coaxially arranged, and signals of the load position detection sensor and the motor rotor position sensor are led to the drive and the controller by shielding wires.

CN 107 040 170 A relates to a small-power control system for permanent-magnet synchronous motor and control method; CN 101 577 519 A relates to a linear motor driver; US 10 505 482 B2 relates to a magnetic pole direction detection device; JP 2014 121717 A relates to a mold-clamping apparatus and mold-clamping method; JP H11 272335 A relates to a positioning controlling method and device therefor; and CA2 63 1 299 C relates to a brushless motor speed control system.

**Summary**

The present invention aims to provide a monitoring device, so as to improve the control precision of the monitoring device over the body motion. The specific technical solutions are as follows.

The invention is set out in the appended set of claims.

In the monitoring device and camera according to the present application, the physical parameter sensor can acquire the physical parameter of the body of the monitoring device in real time, and the magnetic encoder chip can acquire the physical parameter of the motor in real time. The controller can determine in real time whether there is a deviation between the physical parameters of the motor and the body of the monitoring device, and then calibrate the motor in real time to realize the real-time control of the motor motion, thus improve the control precision of the monitoring device over the body motion.

Of course, the implementation of any product or method of the present application does not necessarily need to achieve all the above advantages at the same time.

**Brief Description of the Drawings**

In order to more clearly explain the embodiments of the present application or the technical solutions in the prior art, the drawings that need to be used in the description of the embodiments or the prior art will be briefly introduced in the following.

Fig. 1 is a structural diagram of a monitoring device in the related art;
Fig. 2 is a structural schematic diagram of a monitoring device according to an embodiment of the present application;

Fig. 3 is a schematic diagram of the communication mode of a closed-loop system of the body according to an embodiment of the present application;

Fig. 4 is a schematic flowchart illustrating the time division multiplexing of the closed-loop system of the body according to an embodiment of the present application;

Fig. 5 is another structural schematic diagram of the monitoring device according to an embodiment of the present application;

Fig. 6 is a schematic diagram of the communication mode of the motor closed-loop system according to an embodiment of the present application;

Fig. 7 is a schematic diagram illustrating the communications in motor motion control according to an embodiment of the present application;

Fig. 8 is a schematic flowchart of the calibration of the physical parameter of the motor according to an embodiment of the present application;

Fig. 9 is a schematic diagram of a current sampling circuit according to an embodiment of the present application;

Fig. 10 is a schematic diagram of the internal circuit of the PID controller according to an embodiment of the present application;

Fig. 11 is a structural schematic diagram of the bottom of the monitoring device according to an embodiment of the present application;

Fig. 12 is a schematic diagram of the coils of the motor according to an embodiment of the present application;

Fig. 13 is a structural diagram of a camera according to an example not part of the invention.

## Detailed Description

The technical solutions in the embodiments of the present application will be clearly and completely described below with reference to the drawings in the embodiments of the present application.

The following examples regarding a camera are not according to the invention and are present for illustration purposes only.

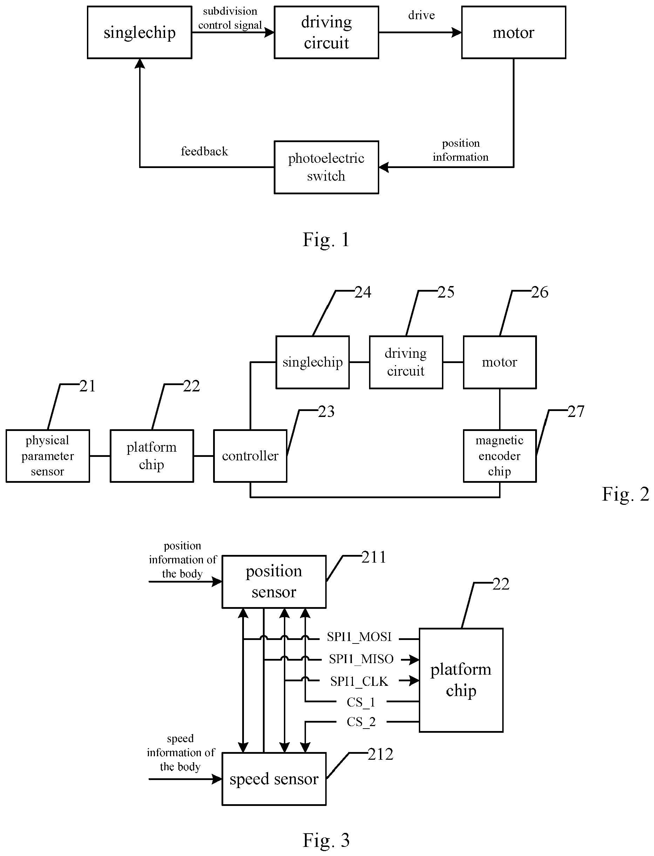

At present, a semi-closed loop control mode is mainly adopted by a monitoring device to control the motor motion. As shown in the semi-closed loop control shown in Fig. 1, the singlechip outputs a subdivision control signal to a driving circuit, which drives a stepping motor and then drives the body of the monitoring device to move. When the body of the monitoring device touches a photoelectric switch, the photoelectric switch feeds back a photoelectric signal to the singlechip, which calibrates the initial position of the stepping motor. In the above-mentioned semi-closed loop control mode, the calibration of the initial position of the stepping motor is started only when the body of the monitoring device touches the photoelectric switch. However, the body of the monitoring device can touch the photoelectric switch only once during one rotation, which leads to the insufficient precision of the initial position calibration of the stepping motor and the insufficient control precision of the monitoring device over the body motion.

In order to improve the control precision of the monitoring device over the motor motion, an embodiment of the present application provides a monitoring device, which may be a device with PT control such as a ball machine, a pan-tilt device.

The structure of the monitoring device according to an embodiment of the present application is shown in Fig. 2, which includes a physical parameter sensor 21, a platform chip 22, a controller 23, a singlechip 24, a driving circuit 25, a motor 26, and a magnetic encoder chip 27. Wherein, the physical parameter sensor 21 is connected to the first end of the platform chip 22, the second end of the platform chip 22 is connected to the first end of the controller 23, the second end of the controller 23 is connected to the first end of the singlechip 24, the second end of the singlechip 24 is connected to the first end of the driving circuit 25, and the second end of the driving circuit 25 is connected to the first end of the motor 26. The motor 26 may be a two-phase motor or a three-phase motor.

In the monitoring device according to an embodiment of the present application, the platform chip 22 is configured to send a motion command to the motor 26.

Wherein, the motion command may be input by a user to the monitoring device or received by the monitoring device from another electronic device. The motion command is used to indicate the body rotation of the monitoring device. The motion command may include information such as the rotation angle and rotation speed of the body.

The motor 26 is configured to rotate according to the motion command and drive the body of the monitoring device to rotate.

The physical parameter sensor 21 is configured to acquire the first physical parameter of the body of the monitoring device and send the first physical parameter to the platform chip 22.

In one embodiment, the physical parameter sensor 21 may include a position sensor and/or a speed sensor; the first physical parameter includes position information and/or speed information. The position sensor is configured to acquire the position information of the body of the monitoring device, and the speed sensor is configured to acquire the speed information of the body of the monitoring device. The position information may also be called position data, and the speed information may also be called motion speed data.

The position information of the body of the monitoring device may include the rotation angle of the body. In one example, the rotation angle of the body is the rotation angle relative to the initial position of the body. Here, the initial position of the body is the position where the body is stationary. The speed information of the body of the monitoring device may include the rotation speed of the body with a unit that may be degrees per second.

Specifically, if the physical parameter sensor 21 includes a position sensor, the first physical parameter includes position information. If the physical parameter sensor 21 includes a speed sensor, the first physical parameter includes speed information. If the physical parameter sensor 21 includes a position sensor and a speed sensor, the first physical parameter includes position information and speed information.

The platform chip 22 is further configured to send the first physical parameter to the controller 23.

In an embodiment of the present application, the platform chip 22 may be connected to the controller 23 through a serial port. That is to say, data communications between the platform chip 22 and the controller 23 are realized through a serial port, and the level signal may be a TTL (Time To Live) level. Here, the level signal is the level signal between the platform chip 22 and the controller 23.

The magnetic encoder chip 27 is configured to acquire the second physical parameter of the motor 26 and send the second physical parameter to the controller 23.

In an embodiment of the present application, the magnetic encoder chip 27 may be installed below the steel magnet of the motor 26, so that the magnetic encoder chip 27 can acquire the second physical parameter in real time and feed the signal back to the controller 23.

In one embodiment, the second physical parameter includes position information and/or speed information. Specifically, if the physical parameter sensor 21 includes a position sensor, the first physical parameter includes position information, and the second physical parameter includes position information. If the physical parameter sensor 21 includes a speed sensor, the first physical parameter includes speed information and the second physical parameter includes speed information. If the physical parameter sensor 21 includes a position sensor and a speed sensor, the first physical parameter includes position information and speed information, and the second physical parameter includes position information and speed information.

In an embodiment of the present application, the position information of the motor 26 may include the rotation angle of the motor. In one example, the rotation angle of the motor is the rotation angle relative to the initial position of the motor. The speed information of the motor 26 may include the rotation speed of the motor. The initial position of the motor is the position where the motor is stationary.

The controller 23 is configured to determine the driving voltage of the motor 26 and generate a control command when the error between the first physical parameter and the second physical parameter is greater than a preset threshold, wherein the control command instructs that the motor 26 should be driven with the driving voltage; and send the control command to the singlechip 24.

Due to the influence of external factors, the rotation speed of the motor may be different under the same torque. In an embodiment of the present application, the controller 23 determines the driving voltage of the motor 26 in real time based on the first physical parameter and the second physical parameter, the driving voltages of different motors 26 may be determined based on different first physical parameters and second physical parameters, the torque input by the motor 26 is different under different driving voltages. The controller 23 drives the motor 26 based on the determined driving voltage, and then calibrates the physical parameter of the motor 26, which may effectively reduce the error between the physical parameter of the body of the monitoring device and the physical parameter of the motor 26 caused by external factors.

The singlechip 24 is configured to generate a driving signal according to the control command, and send the driving signal to the driving circuit, the driving signal instructs that the motor 26 should be driven with the driving voltage.

The driving circuit 25 is configured to output the driving voltage according to the driving signal to drive the motor 26.

In the monitoring device according to an embodiment of the present application, the physical parameter sensor can acquire the physical parameter of the body of the monitoring device in real time, and the magnetic encoder chip can acquire the physical parameter of the motor in real time. The controller can determine in real time whether there is a deviation between the physical parameters of the motor and the body of the monitoring device, then calibrate the initial position of the motor in real time to realize the real-time control of the motor motion, thus improving the control precision of the monitoring device over the body motion.

In an embodiment of the present application, in order to further improve the control precision of the motor motion, the position sensor 211 and the speed sensor 212 may be high-precision sensors. The precision of the position fed back by the position sensor 211 may reach 0.04°. As an auxiliary reference sensor, the speed sensor 212 feeds back the motion speed state of the body of the monitoring device in real time. The position sensor 211 and the speed sensor 212 may be installed at the position of the synchronous wheel of the monitoring device, acquire the position information and speed information of the body of the monitoring device in real time, and eliminate the pulley error.

The above-mentioned motion speed state of the body may include the speed information of the body.

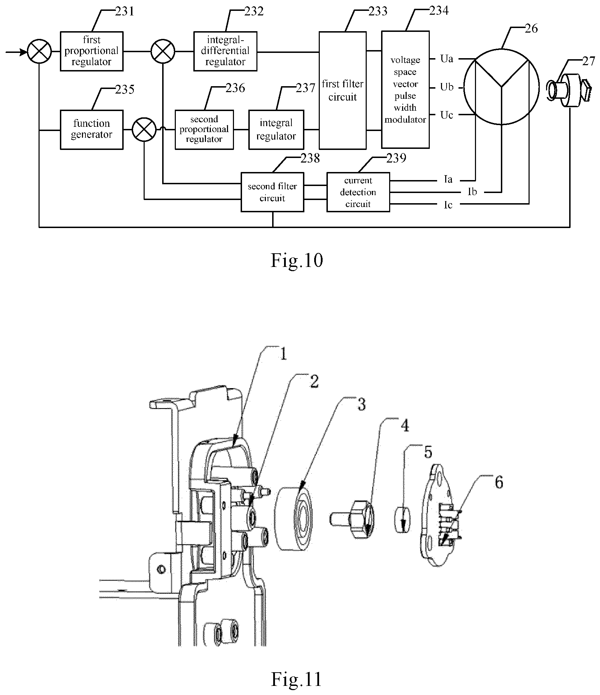

In addition, the position sensor 211 and the speed sensor 212 may be integrated on one PCB (Printed Circuit Board). As shown in Fig. 11, the structure of the bottom of the monitoring device includes a support frame 1, a rotating shaft 2 of the monitoring device, a bearing 3, a magnet holder 4, a steel magnet 5 and a sensor mounting plate 6. The bearing 3 is sleeved outside the rotating shaft 2, and the steel magnet 5 is fixedly installed on the magnet holder 4, one end of which is sleeved within the bearing 3, so that the steel magnet 5 rotates along with the rotating shaft 2, thereby changing the magnetic field at the bottom of the monitoring device. The sensor mounting plate 6 is installed below the magnet holder 4 and the steel magnet 5 without contacting with the steel magnet 5. The position sensor 211 and the speed sensor 212 may be mounted on the sensor mounting plate 6 parallel to the bearing 3. In addition, the magnetic field at the bottom of the monitoring device changes with the rotation of the rotating shaft 2, and then the position sensor 211 and the speed sensor 212 can determine the relative motion of the rotating shaft 2, and the position information and the speed information of the body can be calculated through conversion by detecting the relative motion of the rotating shaft 2.

In an embodiment of the present application, the communications structure between the physical parameter sensor 21 and the platform chip 22 may be regarded as a closed-loop system, which is called a body closed-loop system. The physical parameter sensor 21 may communicate with the platform chip 22 via a serial port. For example, the physical parameter sensor 21 may be connected to the platform chip 22 via an SPI (Serial Peripheral Interface) bus.

In an alternative embodiment, the physical parameter sensor 21 includes a position sensor 211 and a speed sensor 212. Specifically, the communication mode of the closed-loop system of the body is shown in Fig. 3. The platform chip 22 is connected to the position sensor 211 and the speed sensor 212 through an SPI bus; the platform chip 22 is connected to the position sensor 211 through one chip select pin, and the platform chip 22 is connected to the speed sensor 212 through another chip select pin.

The communication mode between the position sensor 211, the speed sensor 212 and the platform chip 22 is shown in Fig. 3. SPI1_MOSI (master output slave input) is a signal sent by the platform chip 22 to the position sensor 211 and the speed sensor 212, SPI1_MISO (master input slave output) signal is a signal sent by the position sensor 211 and the speed sensor 212 to the platform chip 22, SPI1_CLK(Clock) signal is a clock signal, and CS_1 signal is a signal to a CS (Chip Select) pin of the position sensor 211, CS_2 signal is a signal to a CS pin of the speed sensor 212. The communication mode of SPI bus is adopted, the sensor types and data are distinguished through CS, and the time division multiplexing communications between position sensor 211, speed sensor 212 and platform chip 22 are realized.

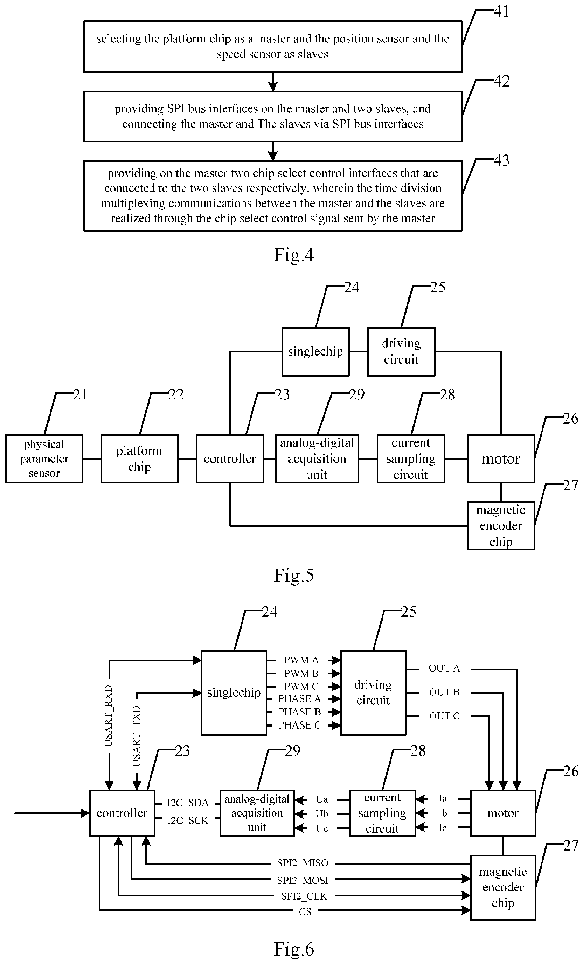

Based on the communications structure shown in Fig. 3, the time division multiplexing flowchart of the closed-loop system of the body is shown in Fig. 4.

Step 41: selecting the platform chip 22 as a master and the position sensor 211 and the speed sensor 212 as slaves.

Step 42: providing SPI bus interfaces on the master and two slaves, and connecting the master and the slaves via the SPI bus interfaces.

Step 43, providing on the master two chip select control interfaces that are connected to the two slaves respectively, wherein the time division multiplexing communications between the master and the slaves are realized through the chip select control signal sent by the master.

For example, the platform chip 22 sends a CS_1 signal to the position sensor 211 when communicated with the position sensor 211, and sends a CS_2 signal to the speed sensor 212 when communicated with the speed sensor 212.

In an alternative embodiment, Fig. 5 shows another structural schematic diagram of the monitoring device according to an embodiment of the present application, which may further include a current sampling circuit 28 and an analog-digital acquisition unit 29 on the basis of Fig. 2. The first end of the current sampling circuit 28 is connected to the second end of the motor 26, the second end of the current sampling circuit 28 is connected to the first end of the analog-digital acquisition unit 29, and the second end of the analog-digital acquisition unit 29 is connected to the third end of the controller 23.

In an embodiment of the present application, the current sampling circuit 28 is configured to acquire the sampling current output by the motor 26, convert the sampling current into a sampling voltage, and send the sampling voltage to the analog-digital acquisition unit 29. The analog-digital acquisition unit 29 is configured to acquire the sampling voltage output by the current sampling circuit and send the acquired sampling voltage to the controller 23. The controller 23 may further be configured to adjust the driving voltage of the motor 26 according to the sampling voltage.

Specifically, the controller 23 determines the driving voltage of the motor when the error between the first physical parameter and the second physical parameter is greater than a preset threshold, and adjusts the driving voltage of the motor 26 according to the sampling voltage, so as to quickly calibrate the position and speed of the motor 23 to avoid overshoot. In addition, the analog-digital acquisition unit 29 may select a 10-bit sensor to acquire the sampling voltage output by the current sampling circuit 28 with high precision.

In an embodiment of the present application, the communications structure for communications among the controller 23, the singlechip 24, the driving circuit 25, the motor 26, the magnetic encoder chip 27, the current sampling circuit 28 and the analog-digital acquisition unit 29 may be regarded as a closed-loop system, which is called a motor closed-loop system.

The controller 23 may be connected to the singlechip 24 through a serial port, that is to say, the controller 23 and the singlechip 24 communicate with each other via a serial port, and the level signal is a TTL(Time To Live) level. Here, the level signal is the level signal between the controller 23 and the singlechip 24.

The singlechip 24 may be connected to the driving circuit 25 via a PWM(Pulse Width Modulation) line, that is, the singlechip 24 communicates with the driving circuit 25 by PWM pulse control.

The driving circuit 25 may drive the motor 26 by outputting a voltage.

The controller 23 may be connected to the magnetic encoder chip 27 via a serial port, that is, data communications between the controller 23 and the magnetic encoder chip 27 are realized via a serial port, and the level signal is a TTL level. The level signal here is the level signal between the controller 23 and the magnetic encoder chip 27.

The driving circuit 25 drives the motor 26 by outputting a voltage, and then the motor 26 outputs a corresponding current. As shown in Fig. 6, the motor 26 outputs three-phase currents of Ia, Ib and Ic. The current sampling circuit 28 converts the three-phase currents of Ia, Ib and Ic into three-phase voltages and transmits them to the analog-digital acquisition unit 29.

The analog-digital acquisition unit 29 may be connected to the controller 23 via an I2C (Inter-Integrated Circuit) bus, that is, the data communications between the analog-digital acquisition unit 29 and the controller 23 are realized by the communication mode of I2C, and the level signal is a TTL level. The level signal here is the level signal between the analog-digital acquisition unit 29 and the controller 23.

In an alternative embodiment, the communication mode of the motor closed-loop system is shown in Fig. 6. The USART (Universal Synchronous/Asynchronous Receiver/Transmitter) _TXD (Transmit Data) is data sent by the controller 23 to the singlechip 24 or data sent by the singlechip 24 to the controller 23, USART_RXD (Receive Data) is data received by the controller 23 from the singlechip 24 or data received by the singlechip 24 from the controller 23; PWM A, PWM B and PWM C are pulse signals sent by the singlechip 24 to the driving circuit 25; PHASE A, PHASE B and PHASE C are phase signals sent by the singlechip 24 to the driving circuit 25; OUT A, OUT B and OUT C are three-phase voltages output by the driving circuit 25 to the motor 26; SPI2_MOSI is a signal sent by the controller 23 to the magnetic encoder chip 27, SPI2_MISO is a signal sent by the magnetic encoder chip 27 to the controller 23, SPI2_CLK is a clock signal, and CS is a signal to the CS pin of the magnetic encoder chip 27; Ia, Ib and Ic are three-phase currents output by the motor 26 to the current sampling circuit 28, and Ua, Ub and Uc are three-phase voltages output by the current sampling circuit 28 to the analog-digital acquisition unit 29; I2C_SDA is serial data and I2C_SCK is a serial clock signal.

Through the above motor closed-loop system, the controller 23 can acquire the position information and speed information of the motor 26, as well as the output current and voltage of the motor 26 in real time. The controller 23 calibrates the initial position of the motor in real time based on the position information and speed information of the motor 26, the output current and voltage of the motor 26, so as to realize the real-time control of the motor motion, and further improve the control precision of the monitoring device over the body motion.

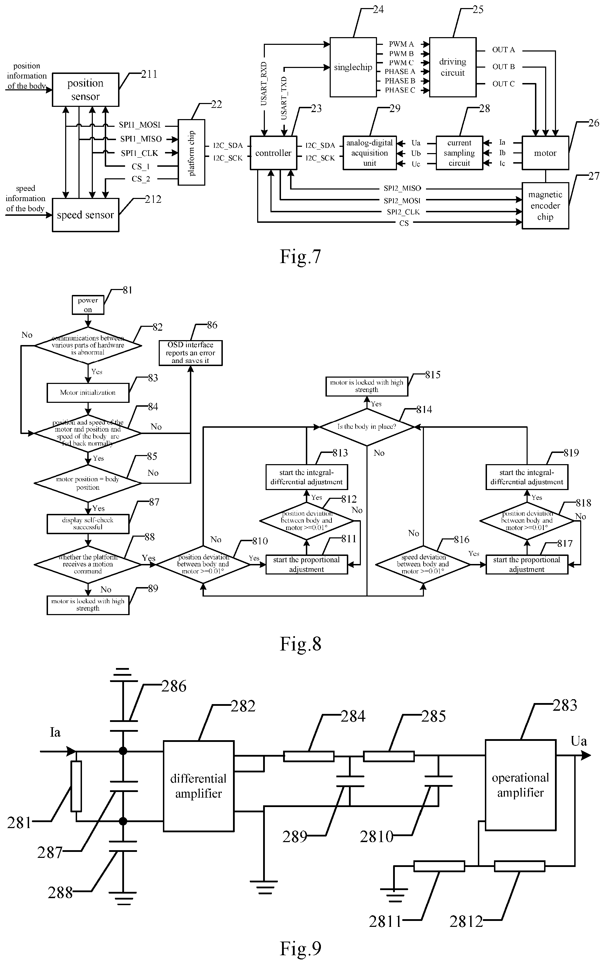

A schematic diagram illustrating the communications in motor motion control as shown in Fig. 7 is obtained by combining the communications structures shown in Figs. 3 and 6. Through the communications structure shown in Fig. 7, the control of the motor motion is realized, thus improving the control precision of the monitoring device over the body motion.

In an alternative embodiment, the controller 23 may be specifically configured to convert the second physical parameter into the third physical parameter of the body of the monitoring device according to a conversion relationship between the physical parameter of the body of the monitoring device and the physical parameter of the motor 26; compare the first physical parameter with the third physical parameter; when the error between the first physical parameter and the third physical parameter is greater than or equal to a preset threshold, determine the driving voltage of the motor 26 and generate a control command; and send the control command to the singlechip 24.

The above preset threshold may be set according to actual requirements. For example, if the physical parameters include position information and speed information, the preset threshold may include a preset position threshold corresponding to the position information and a preset speed threshold corresponding to the speed information. The preset position threshold may be 0.01°, 0.02°, etc., and the preset speed threshold may be 0. 1°/s, 0.2°/s, which are not specifically limited.

The controller 23 is a PID (Proportion Integration Differentiation) controller. The PID controller consists of a proportional unit, an integral unit and a differential unit. The basis of PID control is proportional control; integral control may eliminate steady-state errors, but may increase overshoot; differential control may accelerate the response speed of an inertial system and reduce the overshoot trend.

In one example, the physical parameters include speed information and position information. Take the preset position threshold of 0.01° and the preset speed threshold of 0.1°/s as an example. The motor 26 is driven based on the PID controller, and the process of calibrating the physical parameter of the motor 26 is shown in Fig. 8, including the following steps.

In step 81, the monitoring device is powered on.

In step 82, it is determined whether the communications between various parts of hardware of the monitoring device is abnormal. If the communications between various parts of hardware is abnormal, step 83 is executed. If the communications between various parts of hardware is normal, step 84 is executed.

In step 83, the motor 26 is initialized to ensure normal communications between various parts of hardware.

In step 84, it is determined whether the PID controller normally receives the position information $L_{a1}$ and speed information $v_{a1}$ of the motor 26 fed back by the magnetic encoder chip 27, and determined whether the PID controller normally receives the position information $L_{b1}$ of the body of the monitoring device acquired by the position sensor 211 and the speed information $v_{b1}$ of the body of the monitoring device acquired by the speed sensor 212. If both the results in the above two determinations are positive, step 85 is executed. Otherwise, step 86 is executed.

Wherein, the magnetic encoder chip 27 acquires the position information $L_{a1}$ of the motor 26 and sends the position information $L_{a1}$ to the PID controller. The controller 23 converts the position information $L_{a1}$ into the position information $L_{c1}$ of the body of the monitoring device. The position sensor 211 acquires the position information $L_{b1}$ of the body of the monitoring device and sends the position information $L_{b1}$ to the platform chip 22, and the platform chip 22 sends the position information $L_{b1}$ to the PID controller.

In step 85, the PID controller compares whether the position information $L_{b1}$ and the position information $L_{c1}$ are equal. If yes, step 87 is executed. Otherwise, step 86 is executed.

In step 86, the PID controller reports an error through an OSD (On Screen Display) interface, and saves the error information, so that the user may handle it in time and eliminate the error.

In step 87, the PID controller displays that the self-check is successful through the OSD interface.

In step 88, the platform chip 22 waits to receive the motion command in real time. If the platform chip 22 does not receive a motion command, step 89 is executed. If a motion command is received, step 810 is executed.

In step 89, the motor 26 is locked with high strength, and the body of the monitoring device does not rotate.

In step 810, when receiving the motion command, the platform chip 22 controls the body of the monitoring device to rotate. At this time, the magnetic encoder chip 27 acquires the position information $L_{a2}$ of the motor 26 and sends the position information $L_{a2}$ to the PID controller, the PID controller converts the position information $L_{a2}$ into the position information $L_{c2}$ of the body of the monitoring device. The position sensor 211 acquires the position information $L_{b2}$ of the body of the monitoring device and sends the position information $L_{b2}$ to the platform chip 22, the platform chip 22 sends the position information $L_{b2}$ to the PID controller. The PID controller compares and determines whether the error between the position information $L_{b2}$ and the position information $L_{c2}$ is greater than or equal to 0.01°. If yes, step 811 is executed. Otherwise, step 813 is executed.

In step 811, the PID controller starts a proportional adjustment algorithm to determine the reference voltage of the driving motor. The error can be eliminated below 0.01° by driving the motor with the reference voltage.

In step 812, the PID controller compares and determines whether the error between the position information $L_{b3}$ and the position information $L_{c3}$ is less than 0.01°. If yes, step 813 is executed. Otherwise, the process returns to step 811.

Wherein, the position information $L_{b3}$ is the position information the position sensor 211 acquires the position information of the body of the monitoring device in real time. The position information $L_{c3}$ is the position information of the body of the monitoring device obtained by converting the position information of the motor 26 acquired by the magnetic encoder chip 27 in real time.

In step 813, the PID controller starts an integral-differential adjustment algorithm to adjust the reference voltage to obtain the driving voltage. The error can be controlled at 0° by driving the motor with the reference voltage.

After determining the driving voltage, the PID controller generates a control command that instructs that the motor should be driven with the driving voltage, and sends the control command to the singlechip 24. The singlechip 24 generates, according to the control command, a driving signal that instructs that the motor should be driven with the driving voltage, and sends the driving signal to the driving circuit, the driving circuit outputs a driving voltage according to the driving signal to drive the motor 26.

In step 814, the PID controller acquires the position information of the body of the monitoring device acquired by the position sensor 211 in real time, and determines whether the body of the monitoring device moves to a designated position. If yes, step 815 is executed. Otherwise, steps 810 and 816 are executed.

The PID controller acquires the position information of the body of the monitoring device acquired by the position sensor 211 in real time, which is specifically as follows: the position sensor 211 acquires the position information of the body of the monitoring device in real time, and sends the acquired position information to the platform chip 22, and the platform chip 22 sends the acquired position information to the PID controller.

In step 815, the motor 26 is locked with high strength, and the body of the monitoring device does not rotate.

In step 816: when receiving the motion command, the platform chip 22 controls the body of the monitoring device to rotate. At this time, the magnetic encoder chip 27 acquires the speed information $v_{a2}$ of the motor 26 and sends the speed information $v_{a2}$ to the PID controller; the PID controller converts the speed information $v_{a2}$ into the speed information $v_{c2}$ of the body of the monitoring device. The speed sensor 212 acquires the speed information $v_{b2}$ of the body of the monitoring device, and sends the speed information $v_{b2}$ to the platform chip 22, and the platform chip 22 sends the speed information $v_{b2}$ to the PID controller. The PID controller compares and determines whether the error between the speed information $v_{b2}$ and the speed information $v_{c2}$ is greater than or equal to 0.1°/s. If yes, step 817 is executed. Otherwise, step 814 is executed.

In step 817: the PID controller starts the proportional adjustment algorithm to determine the reference voltage of the driving motor. The error can be eliminated below 0. 1°/s by driving the motor with the reference voltage.

In step 818, the PID controller compares and determines whether the error between the speed information $v_{b3}$ and the speed information $v_{c3}$ is less than 0. 1°/s. If yes, step 819 is executed. Otherwise, the process returns to step 817.

Wherein the speed information $v_{b3}$ is the speed information of the body of the monitoring device acquired by the speed sensor 212 in real time. The speed information $v_{c3}$ is the speed information of the body of the monitoring device obtained by converting the speed information of the motor 26 acquired by the magnetic encoder chip 27 in real time.

In step 819, the PID controller starts the integral-differential adjustment algorithm to adjust the reference voltage to obtain the driving voltage. The error can be controlled at 0°/s by driving the motor with the reference voltage. Step 814 is executed again.

After determining the driving voltage, the PID controller generates a control command that instructs that the motor should be driven with the driving voltage, and sends the control command to the singlechip 24, the singlechip 24 generates a driving signal according to the control command, and sends the driving signal to the driving circuit, the driving circuit outputs a driving voltage according to the driving signal to drive the motor 26, wherein the driving signal instructs that the motor should be driven with the driving voltage.

In an embodiment of the present application, the high-precision control of the motor motion is realized through the above steps 81-819.

In an alternative embodiment, the current sampling circuit 28 shown in Fig. 9 may include a first resistor 281, a differential amplifier 282, an operational amplifier 283, a second resistor 284, a third resistor 285, a first capacitor 286, a second capacitor 287, a third capacitor 288, a fourth capacitor 289, a fifth capacitor 2810, a fourth resistor 2811 and a fifth resistor 2812;

the first end of the first resistor 281 is connected to the motor 26, the first end of the first resistor 281 is connected to the first end of the differential amplifier 282, and the second end of the first resistor 281 is connected to the second end of the differential amplifier 282;

the first end of the first capacitor 286 is grounded, the second end of the first capacitor 286 is connected to the first end of the differential amplifier 282, the first end of the second capacitor 287 is connected to the first end of the differential amplifier 282, the second end of the second capacitor 287 is connected to the second end of the differential amplifier 282, the first end of the third capacitor 288 is grounded, and the second end of the third capacitor 288 is connected to the second end of the differential amplifier 282;

the third end of the differential amplifier 282 is grounded, the fourth and fifth ends of the differential amplifier 282 are connected to the first end of the second resistor 284, the second end of the second resistor 284 is connected to the first end of the third resistor 285, and the second end of the third resistor 285 is connected to the first end of the operational amplifier 283;

the first end of the fourth capacitor 289 is connected to the first end of the third resistor 285, the second end of the fourth capacitor 289 is grounded, the first end of the fifth capacitor 2810 is connected to the first end of the operational amplifier 283, and the second end of the fifth capacitor 2810 is grounded;

the second end of the operational amplifier 283 is connected to the first end of the fifth resistor 2812, the third end of the operational amplifier 283 is connected to the second end of the fifth resistor 2812, the second end of the fifth resistor 2812 is connected to the first end of the fourth resistor 2811, the second end of the fourth resistor 2811 is grounded, and the second end of the operational amplifier 283 is connected to the analog-digital acquisition unit 29.

Based on the current sampling circuit 28, the sampling current is converted into a voltage signal through the first resistor 281. The first capacitor 286, the second capacitor 287 and the third capacitor 288 perform first-order filtering, that is, filter the voltage signal. Thereafter, the voltage signal is converted into a single-ended signal by the differential amplifier 282. The second resistor 284 and the third resistor 285 are used as balance resistors to protect the precision resistors inside the differential amplifier 282. The operational amplifier 283 amplifies the voltage value of the single-ended signal to a preset voltage value range to obtain a sampling voltage, so as to improve the conversion resolution.

At the same time, the fourth capacitor 289 and the fifth capacitor 2810 perform second-order filtering on the single-ended signal, that is, low-pass filtering on the single-ended signal, so as to remove interference, ensure the voltage measurement range, improve the signal-to-noise ratio, and provide a good voltage input signal for the analog-digital acquisition unit 29.

According to the present invention, the internal circuit of the PID controller is shown in Fig. 10. The singlechip 24, the driving circuit 25, the current sampling circuit 28 and the analog-digital acquisition unit 29 are not shown in Fig. 10, which simply shows the internal circuit of the PID controller, the motor 26 and the magnetic encoder chip 27. The PID controller includes a first proportional regulator 231, an integral-differential regulator 232, a first filter circuit 233, a voltage space vector pulse width modulator 234, a function generator 235, a second proportional regulator 236, an integral regulator 237, a second filter circuit 238 and a current detection circuit 239. Wherein, the first filter circuit 233 and the second filter circuit 238 may be MT/$\alpha\beta$ circuits.

The first end of the first proportional regulator 231 is connected to the magnetic encoder chip 27, the second end of the first proportional regulator 231 is connected to the first end of the integral-differential regulator 232, and the second end of the integral-differential regulator 232 is connected to the first end of the first filter circuit 233;

the first end of the function generator 235 is connected to the magnetic encoder chip 27, the second end of the function generator 235 is connected to the first end of the second proportional regulator 236, the second end of the second proportional regulator 236 is connected to the first end of the integral regulator 237, and the second end of the integral regulator 237 is connected to the second end of the first filter circuit 238;

the first end of the current detection circuit 239 is connected to the motor 26, the second end of the current detection circuit 239 is connected to the first end of the second filter circuit 238, the second end of the second filter circuit 238 is connected to the magnetic encoder chip 27, the third end of the second filter circuit 238 is connected to the first end of the integral-differential regulator 232, and the fourth end of the second filter circuit 238 is connected to the first end of the second proportional regulator 236;

the third end of the first filter circuit 233 is connected to the first end of the voltage space vector pulse width modulator 234. Wherein, the voltage space vector pulse width modulator 234 may be connected to the singlechip 24.

It may be understood that the first end of the current detection circuit 239 is connected to the motor 26, which means that the first end of the current detection circuit 239 is connected to the analog-digital acquisition unit 29, the analog-digital acquisition unit 29 is connected to the current sampling circuit 28, and the current sampling circuit 28 is connected to the motor 26, so that the first end of the current detection circuit 239 is connected to the motor 26.

In an embodiment of the present application, when the PID controller adjusts the motor motion, the above internal circuit may be divided into a position control loop and a current control loop.

Position control loop: the first proportional regulator 231 and the integral-differential regulator 232 perform proportional, integral and differential operations based on the position information and speed information of the motor 26 fed back by the magnetic encoder chip 27 to determine the driving voltage; the function generator 235 compensates for the motion feedback of the motor 26, the function generator 235 performs algorithm compensation on the position information of the motor 26 fed back by the magnetic encoder chip 27, and determines the difference between the position information of the motor required by the PID controller and the actual position information of the motor, that is, the compensated position information of the motor, and the second proportional regulator 236 and the integral regulator 237 perform proportional and integral operations on the compensated position information of the motor to obtain compensation data; the first filter circuit 233 filters the driving voltage and compensation data, and inputs the filtered driving voltage into the voltage space vector pulse width modulator 234; the voltage space vector pulse width modulator 234 generates a pulse command based on the filtered driving voltage, and then the driving circuit outputs the driving voltage to the motor 26 based on the pulse command. The pulse command is the above driving signal. The pulse command includes a first pulse command and a second pulse command. The specific uses of the first pulse command and the second pulse command will be described in detail below, and will not be described here.

Current control loop: the current detection circuit 239 detects the current fed back by the motor 26 and inputs the current to the second filter circuit 238; the second filter circuit 238 filters the current and sends the filtered current to the integral-differential regulator 232 and the second proportional regulator 236; the integral-differential regulator 232 and the second proportional regulator 236 perform proportional, integral and differential operations on the position information of the motor 26 based on the current to accurately determine the driving voltage of the motor 26.

In an embodiment of the present application, the voltage space vector pulse width modulator 234 adjusts the filtered driving voltage and filtered driving current, and outputs the driving voltage to the motor 26. The phase number of the driving voltage output by the voltage space vector pulse width modulator 234 to the motor 26 corresponds to the phase number of the motor 26. For example, the motor 26 is a three-phase motor, and the voltage space vector pulse width modulator 234 outputs a three-phase driving voltage to the motor 26, as shown in Fig. 10.

In addition, in an embodiment of the present application, before the second filter circuit 238 inputs the filtered current into the integral-differential regulator 232 and the second proportional regulator 236, proportional and integral operations can be performed on the current, and then the integral-differential regulator 232 and the second proportional regulator 236 perform proportional, integral and differential operations on the position information of the motor 26 based on the results of the proportional and integral operations to determine the driving voltage of the motor 26. The voltage of the driving motor is adjusted through the current control loop in combination with the position control loop. Therefore, only proportional and integral control can be performed on the current, without differential control, which saves the cost of the PID controller.

Again, the voltage of the driving motor is adjusted and the current fed back by the motor 26 is monitored in real time through the current control loop in combination with the position control loop, to monitor the current and avoid the overshoot of the voltage output by the position control loop. In addition, in the technical solution according to an embodiment of the present application, the current control loop is provided, and corresponding amount of current may be output as required, so that the motion control efficiency of the motor 26 is greatly improved.

In one example, the first proportional regulator 231 and the second proportional regulator 236 may perform a proportional operation on the position information of the motor 26 by using the following formula (1), to determine the first proportional gain, and then adjust the driving voltage of the motor 26 based on the first proportional gain.

$$Y\_Kp = 0.18*Ts*spd\_cont*gain\_ad*J \qquad (1)$$

In formula (1), Y_Kp is a first proportional gain, Ts is the switching period of motor 26, spd_cont is the speed constant of the motor 26, gain_ad is the inertia constant of the motor 26, gain_ad=Rs*Kad, Rs is the internal resistance of the motor 26, Kad is the current value of the motor 26, and J is the moment of inertia of the motor 26.

In one example, the integral-differential regulator 232 and the integral regulator 237 may perform an integral operation on the position information of the motor 26 by using the following formula (2), to determine the first integral gain, and then adjust the driving voltage of the motor based on the first integral gain.

$$Y\_Ki = S + 2\pi*fz1/S + 2\pi*fp1 \qquad (2)$$

In the formula (2), Y_Ki represents the first integral gain, s represents the position of the motor 26, and fz1 and fp1 represent the rotation frequency of the motor 26, where the value range of fz1 is from 0.2Hz to 2Hz, and the value range of fp1 is from 100 to 200*fz1.

The integral-differential regulator 232 may perform an differential operation on the position information of the motor 26 by using the following formula (3) to determine a first differential gain, and then adjust the driving voltage of the motor based on the first differential gain.

$$Y\_Kd = S + 2\pi*fz2/S + 2\pi*fp2 \qquad (3)$$

In the formula (3), Y_Kd represents the first differential gain, s represents the position of the motor 26, and fz2 and fp2 represent the rotation frequency of the motor 26, wherein the value range of fz2 is 1/100fp1 and the value range of fp2 is from 200 to 500*fz2.

In an embodiment of the present application, the PID controller may adjust the parameters in the above formulas (1), (2) and (3) based on the position information and speed information fed back by the magnetic encoder chip 27, and then adjust the driving voltage of the motor 26, so as to realize high-precision and high-response motor motion control.

In an example, the following formula (4) may be used to perform a proportional operation on the acquired current value of the motor 26, to determine the second proportional gain, and then adjust the driving current of the motor based on the second proportional gain.

$$Current\_Kp = (51.2/\sqrt{3}*Vin)*(Lp/gain\_ad) \qquad (4)$$

In formula (4), Current_Kp is the second proportional gain, Vin represents the input voltage of the motor 26, Lp represents the inductance of the motor 26, and gain_ad represents the inertia constant of the motor 26.

The above-mentioned proportional operation on the current value may be implemented by the current detection circuit 239, and may be implemented by the second filter circuit 238, and may be implemented by a PID regulator that may be inserted between the current detection circuit 239 and the second filter circuit 238, to which the present application is not particularly limited.

In one example, the following formula (5) may be used to perform an integral operation on the acquired current value of the motor 26, to determine a second integral gain, and then adjust the driving current of the motor based on the second integral gain.

$$Current\_Ki=(819.2/\sqrt{3}*Vin)*(Rs*Ts/gain\_ad) \qquad (5)$$

In the formula (5), Current_Ki is the second integral gain, Vin represents the input voltage of the motor 26, Rs represents the internal resistance of the motor 26, Ts represents the switching period of the motor 26, and gain_ad is the inertia constant of the motor 26.

The above-mentioned integral operation on the current value may be implemented by the current detection circuit 239, and may be implemented by the second filter circuit 238, and may be implemented by a PID regulator that may be inserted between the current detection circuit 239 and the second filter circuit 238, to which the present application is not particularly limited.

In the embodiment of the present application, the signal output by the motor 26 is fine-tuned based on the parameters in the above formulas (4) and (5), so as to realize high-precision and high-response motor motion control.

In an alternative embodiment, the magnetic encoder chip 27 may be have a built-in 16-bit high-precision analog-digital sensor. One of these 16 bits is the status bit, and the position control precision can reach $360°/2^{15} = 0.01°$. The magnetic encoder chip 27 may be installed below the steel magnet of the motor, so as to avoid failing to sense the state of the motor in real time due to the transmission error of the motor 26.

In an alternative embodiment, the motor 26 may be a three-phase DC brushless motor. The three-phase DC brushless motor has characteristics of high efficiency and high response. The application of the three-phase brushless DC motor into the monitoring device can achieve high torque and high torque while taking into account the low-speed stability, and thus realize high-efficiency and high-response control of the motor motion. The introduction of three-phase DC brushless motor improves the torque and the rotating speed of a monitoring device with PT control, and then increases the product competitiveness of the monitoring device.

In one embodiment, the three-phase DC brushless motor has built-in 8 pairs of NS poles and 8 pairs of rotors, and the rotor of the three-phase DC brushless motor is a permanent magnet. The bottom of the motor is equipped with a magnet holder and a steel magnet, which move synchronously along with the motion of the motor and change the magnetic field at the bottom of the motor in real time. The three-phase DC brushless motor generates a magnetic field through the current between coils, and then drives the rotor inside the motor. In addition, the three-phase DC brushless motor rotates the rotor by changing the direction of the magnetic field generated by the surrounding coils, and controls the rotation speed of the rotor by controlling the direction and magnitude of the current to the coils.

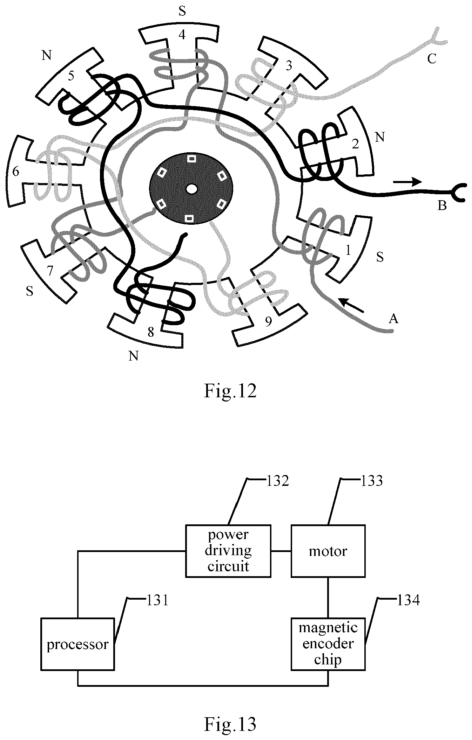

In an embodiment of the present application, the coils of the three-phase DC brushless motor are shown in Fig. 12. Based on the coils shown in Fig. 12, there are six energization modes of the three-phase DC brushless motor, including: phase A as an input and phase B as an output; phase A as an input and phase C as an output, phase B as an input and phase A as an output; phase C as an input and phase A as an output; phase C as an input and phase B as an output.

Compared with the three-phase DC brushless motor with the same specification, the torque of the stepping motor can be increased by 1.5 times and the maximum speed can be increased by 2 times.

In an embodiment of the present application, the driving circuit needs to satisfy the following matrix:

$$\begin{bmatrix} Ua \\ Ub \\ Uc \end{bmatrix} = \begin{bmatrix} Rs & 0 & 0 \\ 0 & Rs & 0 \\ 0 & 0 & Rs \end{bmatrix} * \begin{bmatrix} Ia \\ Ib \\ Ic \end{bmatrix} + \begin{bmatrix} La & Lab & Lac \\ Lba & Lb & Lbc \\ Lca & Lcb & Lc \end{bmatrix} * p * \begin{bmatrix} Ia \\ Ib \\ Ic \end{bmatrix} + \begin{bmatrix} Ea \\ Eb \\ Ec \end{bmatrix}.$$

Wherein, Ua, Ub and Uc represent three-phase voltages; Ia, Ib and Ic represent three-phase currents; Rs represents the internal resistance of the motor 26; Lij represents the mutual inductance of the i-phase internal resistance relative to the j-phase internal resistance of the motor 26; La, Lb and Lc represent the three-phase self-inductance of the motor 26; p represents a differential operator; and Ea, Eb and Ec represent the electromotive force of the three-phase stator phase windings.

In an alternative embodiment, the monitoring device may further include a PCB, wherein a magnetic encoder chip 27 is mounted on the back of the PCB, and the steel magnet of the motor is placed directly above the magnetic encoder chip 27, and there is a gap between the magnetic encoder chip 27 and the steel magnet of the motor, that is, there is no contact between the magnetic encoder chip 27 and the steel magnet of the motor. The distance between the magnetic encoder chip 27 and the steel magnet may be calculated by simulation. When installing the magnetic encoder chip 27, it is necessary to ensure the installation precision and avoid inaccurate motor motion control caused by installation errors.

In an alternative embodiment, the monitoring device may further include a PCB and a heat radiator. A driving circuit 25 is mounted on the front side of the PCB, and the driving circuit 25 is connected to the heat radiator. In practical applications, the driving circuit 25 will generate heat, and the driving circuit 25 can always work in an optimal environment by being connected to the heat radiator through thermal conductive materials such as thermal pads.

In an embodiment of the present application, the SPI bus may appear in the side direction of the body of the monitoring device to be connected to the controller 23.

Based on the above monitoring device, an example not part of the invention provides a camera. Refer to Fig. 13, which is a structural schematic diagram of a camera. The camera includes:

a processor 131 configured to receive a pitching command input from outside and generate a pulse command for controlling the rotation of a motor according to the pitching command;

a power driving circuit 132 connected to the processor 131 via a pulse width modulation line and configured to receive a pulse command from the processor and generate a corresponding three-phase voltage signal according to the pulse command;

a motor 133 connected to the power driving circuit 132 and configured to perform a corresponding rotation according to the three-phase voltage signal;

a magnetic encoder chip 134 arranged at the bottom of the motor 133 and configured to acquire the current position data of the motor 133 during the corresponding rotation of the motor and transmit the current position data of the motor to the processor 131;

wherein the processor 131 is further configured to acquire the current position data of the camera and receive the current position data of the motor from the magnetic encoder chip; calculate a first difference between the current position data of the camera and the current position data of the motor; generate a new first pulse command according to the first difference, wherein the new first pulse command is configured to control the motor to perform a new rotation so that the first difference is smaller than a preset position threshold.

The processor 131 may include a platform chip 22, a controller 23 and a singlechip 24, and may also include the controller 23 and the singlechip 24. The processor 131 is not specifically limited in the embodiments of the present application. Here, the functions and uses of the platform chip 22, the controller 23 and the singlechip 24 may be specifically referred to the description of the above-mentioned Figs. 2-12. The power driving circuit 132 is the same as the above driving circuit 25, the motor 133 is the same as the above motor 26, and the magnetic encoder chip 134 is the same as the above magnetic encoder chip 27. The pitching command is the same as the above motion command. The current position data of the camera is the current position data of the body of the camera.

In the camera, the processor acquires the position data of the motor and the position data of the camera in real time, and then the processor can determine whether there is a deviation between the position data of the motor and the position data of the camera in real time, so as to calibrate the motor in real time, realize the real-time control of the motor motion, and further improve the control precision of the camera over the body motion.

In another example, the camera may further include:

a position sensor (not shown in Fig. 13) configured to acquire the current position data of the camera in real time and transmit the current position data of the camera to the processor.

In another example, the processor 131 may be specifically configured to:

when the first difference exceeds the preset position threshold, perform a proportional operation on the current position data of the motor to obtain a first proportional gain, under which the difference between the position data of the motor and the current position data of the camera is smaller than the preset position threshold; perform differential and integral operations on the current position data of the motor to obtain a first differential-integral gain, wherein the difference between the position data of the motor and the current position data of the camera is zero under the first proportional gain and the first differential-integral gain; generate a new first pulse command according to the first proportional gain and the first differential-integral gain.

The camera may further include:

a speed sensor (not shown in Fig. 13), which is configured to acquire current motion speed data of the camera in real time and transmit the current motion speed data of the camera to the processor;

in this case, the magnetic encoder chip 134 is further configured to acquire the current motion speed data of the motor during the corresponding rotation of the motor, and transmit the current motion speed data of the motor to the processor;

the processor 131 may be further configured to:

acquire the current motion speed data of the camera and receive the current motion speed data of the motor from the magnetic encoder chip; calculate a second difference between the current motion speed data of the camera and the current motion speed data of the motor; when the second difference exceeds the preset speed threshold, perform a proportional operation on the current motion speed data of the motor to obtain a second proportional gain, under which the difference between the motion speed data of the motor and the current motion speed data of the camera is smaller than the preset speed threshold; perform differential and integral operations on the current motion speed data of the motor to obtain a second differential-integral gain, wherein the difference between the motion speed data of the motor and the current motion speed data of the camera is zero under the second proportional gain and the second differential-integral gain; generate a new second pulse command according to the second proportional gain and the second differential-integral gain, wherein the new second pulse command is configured to control the motor to perform a new rotation so that the second difference is smaller than the preset speed threshold.

The precision of the position fed back by the position sensor reaches 0.04°, and the position sensor and the speed sensor are integrated on one PCB.

The processor 131 may be specifically configured to:

when the first difference exceeds the preset position threshold, perform proportional, integral and differential operations on the current position data of the motor to obtain data to be filtered; perform algorithm compensation on the current position data of the motor through a function generator, and perform proportional and integral operations on the compensated current position data of the motor to obtain compensation data; filter the data to be filtered and the compensation data to obtain filtered data; perform pulse width modulation on the filtered data to generate a new first pulse command.

The camera may further include:

a current sampling circuit, which is connected to the motor and the controller, and configured to sample a three-phase current flowing through the motor and send the three-phase current values of the sampled three-phase current to the processor 131;

In this case, the processor 131 may be specifically configured to:

perform proportional and integral operations on the three-phase current values to obtain adjustment auxiliary data; when the first difference exceeds the preset position threshold, perform proportional, integral and differential operations on the current position data of the motor based on the adjustment auxiliary data to obtain data to be filtered; perform algorithm compensation on the current position data of the motor through a function generator, and perform proportional and integral operations on the compensated current position data of the motor based on the adjustment auxiliary data to obtain compensation data; filter the data to be filtered and the compensation data to obtain filtered data; perform pulse width modulation on the filtered data to generate a new first pulse command.

The specific details of the above-mentioned position sensor, speed sensor and current sampling circuit can refer to the description of Figs. 2-12.

The above-mentioned first end, second end, third end and fourth end are only for the purpose of distinguishing different ports of the devices, and have no limiting effect.

It should be noted that in this application, relational terms such as first and second are only used to distinguish one entity or operation from another entity or operation, and do not necessarily require or imply any such actual relationship or sequence between these entities or operations. Moreover, the terms "comprising", "including" or any other variation thereof are intended to cover non-exclusive inclusion, so that a process, method, article or device that includes a series of elements includes not only those elements, but also other elements not explicitly listed, alternatively also elements inherent to such process, method, article or device. Without further restrictions, the element defined by the statement "including a ..." does not exclude the presence of additional identical elements in the process, method, article or device that includes the said element.

All the embodiments in this specification are described in a related manner, and the same and similar parts of each embodiment may be referred to each other, and each embodiment focuses on the differences from the other embodiments. Especially, for the camera, since it is basically similar to the monitoring device embodiment, the description is relatively simple, and reference may be made to the partial description of the monitoring device embodiment for the relevant parts.

## Claims

1. A monitoring device, comprising a physical parameter sensor (21), a platform chip (22), a controller (23), a singlechip (24), a driving circuit (25), a motor (26) and a magnetic encoder chip (27);

    wherein, the platform chip (22) is configured to send a motion command to the motor (26);
    the motor (26) is configured to rotate according to the motion command and drive a body of the monitoring device to rotate;

the physical parameter sensor (21) is configured to acquire a first physical parameter of the body of the monitoring device and send the first physical parameter to the platform chip (22);

the platform chip (22) is further configured to send the first physical parameter to the controller (23);

the magnetic encoder chip (27) is configured to acquire a second physical parameter of the motor (26) and send the second physical parameter to the controller (23);

the controller (23) is configured to determine a driving voltage of the motor (26) and generate a control command when an error between the first physical parameter and the second physical parameter is greater than a preset threshold, wherein the control command instructs that the motor (26) should be driven with the driving voltage; and send the control command to the singlechip (24);

the singlechip (24) is configured to generate a driving signal according to the control command and send the driving signal to the driving circuit (25), wherein the driving signal instructs that the motor (26) should be driven with the driving voltage;

the driving circuit (25) is configured to output the driving voltage according to the driving signal to drive the motor (26);

wherein the controller (23) is a PID, Proportion Integration Differentiation, controller;

**characterized in that** the PID controller comprises a first proportional regulator (231), an integral-differential regulator (232), a first filter circuit (233), a voltage space vector pulse width modulator (234), a function generator (235), a second proportional regulator (236), an integral regulator (237), a second filter circuit (238) and a current detection circuit (239);

a first end of the first proportional regulator (231) is connected to the magnetic encoder chip (27), a second end of the first proportional regulator (231) is connected to a first end of the integral-differential regulator (232), and a second end of the integral-differential regulator (232) is connected to a first end of the first filter circuit (233);

a first end of the function generator (235) is connected to the magnetic encoder chip (27), a second end of the function generator (235) is connected to a first end of the second proportional regulator (236), a second end of the second proportional regulator (236) is connected to a first end of the integral regulator (237), and a second end of the integral regulator (237) is connected to a second end of the first filter circuit (233);

a first end of the current detection circuit (239) is connected to the motor (26), a second end of the current detection circuit (239) is connected to a first end of the second filter circuit (238), a second end of the second filter circuit (238) is connected to the magnetic encoder chip (27), a third end of the second filter circuit (238) is connected to the first end of the integral-differential regulator (232), and a fourth end of the second filter circuit (238) is connected to the first end of the second proportional regulator (236);

a third end of the first filter circuit (233) is connected to a first end of the voltage space vector pulse width modulator (234), and a second end of the voltage space vector pulse width modulator (234) is connected to the singlechip (24).

2. The monitoring device according to claim 1, wherein the controller (23) is specifically configured to:

convert the second physical parameter into a third physical parameter of the body of the monitoring device according to a conversion relationship between a physical parameter of the body of the monitoring device and a physical parameter of the motor (26);

compare the first physical parameter with the third physical parameter;

when an error between the first physical parameter and the third physical parameter is greater than or equal to a preset threshold, determine the driving voltage of the motor (26) and generate a control command, and send the control command to the singlechip (24).

3. The monitoring device according to claim 2, wherein the physical parameter sensor (21) comprises a position sensor and/or a speed sensor; the first physical parameter and the second physical parameter comprise position information and/or speed information;

the position sensor is configured to acquire position information of the body of the monitoring device in real time and transmit the position information of the body of the monitoring device to the controller (23);

the speed sensor is configured to acquire speed information of the body of the monitoring device in real time and transmit the speed information of the body of the monitoring device to the controller (23);

the magnetic encoder chip (27) is specifically configured to acquire position information and speed information of the motor (26) during a corresponding rotation of the motor (26), and transmit the position information and the speed information of the motor (26) to the controller (23);

the controller (23) is specifically configured to calculate a first difference between the position information of the body of the monitoring device and the position information of the motor (26); calculate a second difference between the speed information of the body of the monitoring device and the speed information of the motor (26); when the first difference exceeds a preset position threshold or the second difference exceeds a preset speed threshold, perform a proportional operation on the position information and the speed information of the motor (26) to obtain a proportional gain, under which a difference between the position information of the motor (26) and the position information of the body of the monitoring device is smaller than the preset position threshold and a difference between the speed information of the motor (26) and the speed information of the body of the monitoring device is smaller than the preset speed threshold; perform differential and integral operations on the position information and the speed information of the motor (26) to obtain a differential-integral gain, wherein the difference between the position information of the motor (26) and the position information of the body of the monitoring device is zero and the difference between the speed information of the motor (26) and the speed information of the body of the monitoring device is zero under the proportional gain and the differential-integral gain; generate a new control command according to the proportional gain and the differential-integral gain.

4. The monitoring device according to claim 3, wherein the platform chip (22) is connected to the position sensor and the speed sensor via a serial peripheral interface bus;
the platform chip (22) is connected to the position sensor through one chip select pin and to the speed sensor through another chip select pin.

5. The monitoring device according to claim 3, wherein precision of a position fed back by the position sensor reaches 0.04°, and the position sensor and the speed sensor are integrated on one PCB, printed circuit board.

6. The monitoring device according to claim 1, wherein the first proportional regulator (231) and the second proportional regulator (236) determine a first proportional gain Y_Kp by using the following formula:

$$Y\_Kp = 0.18 * Ts * spd\_cont * gain\_ad * J,$$

the integral-differential regulator (232) determines a first differential gain Y_Kd and a first integral gain Y_Ki by using the following formulas:

$$Y\_Ki = S + 2\pi * fz1 / S + 2\pi * fp1$$

$$Y\_Kd = S + 2\pi * fz2 / S + 2\pi * fp2,$$

wherein, Ts represents a switching period of the motor (26), spd_cont represents a speed constant of the motor (26), gain_ad represents an inertia constant of the motor (26), J represents a moment of inertia of the motor (26), S represents a position of the motor (26), fz1, fp1, fz2 and fp2 represent a rotation frequency of the motor (26), and a value range of fz1 is from 0.2Hz to 2Hz, a value range of fp1 is from 100 to 200*fz1, a value range of fz2 is 1/100fp1, and a value range of fp2 is from 200 to 500*fz2.

7. The monitoring device according to claim 1, wherein the current detection circuit (239) determines a second proportional gain Current_Kp by using the following formula:

$$Current\_Kp = (51.2 / \sqrt{3} * Vin) * (Lp / gain\_ad),$$

the current detection circuit (239) determines a second integral gain Current_Ki by using the following formula:

$$Current\_Ki = (819.2 / \sqrt{3} * Vin) * (Rs * Ts / gain\_ad),$$

wherein, Vin represents an input voltage of the motor (26), Lp represents a inductance of the motor (26), gain_ad represents an inertia constant of the motor (26), Rs represents an internal resistance of the motor (26), and Ts represents a switching period of the motor (26).

8. The monitoring device according to claim 1, wherein the monitoring device further comprises a current sampling circuit (28) and an analog-digital acquisition unit (29);

> the current sampling circuit (28) is configured to acquire a sampling current output by the motor (26), convert the sampling current into a sampling voltage, and send the sampling voltage to the controller (23);
> the analog-digital acquisition unit (29) is configured to acquire the sampling voltage output by the current sampling circuit (28) and send the acquired sampling voltage to the controller (23);
> the controller (23) is further configured to adjust the driving voltage according to the sampling voltage.

9. The monitoring device according to claim 8, wherein the current sampling circuit (28) comprises a first resistor (281), a differential amplifier (282), an operational amplifier (283), a second resistor (284), a third resistor (285), a first capacitor (286), a second capacitor (287), a third capacitor (288), a fourth capacitor (289), a fifth capacitor (2810), a fourth resistor (2811) and a fifth resistor (2812);

> a first end of the first resistor (281) is connected to the motor (26) and is connected to a first end of the differential amplifier (282), and a second end of the first resistor (281) is connected to a second end of the differential amplifier (282);
> a first end of the first capacitor (286) is grounded, a second end of the first capacitor (286) is connected to the first end of the differential amplifier (282), a first end of the second capacitor (287) is connected to the first end of the differential amplifier (282), a second end of the second capacitor (287) is connected to the second end of the differential amplifier (282), a first end of the third capacitor (288) is grounded, and a second end of the third capacitor (288) is connected to the second end of the differential amplifier (282);
> a third end of the differential amplifier (282) is grounded, fourth and fifth ends of the differential amplifier (282) are connected to a first end of the second resistor (284), a second end of the second resistor (284) is connected to a first end of the third resistor (285), and a second end of the third resistor (285) is connected to a first end of the operational amplifier (283);
> a first end of the fourth capacitor (289) is connected to the first end of the third resistor (285), a second end of the fourth capacitor (289) is grounded, a first end of the fifth capacitor (2810) is connected to the first end of the operational amplifier (283), and a second end of the fifth capacitor (2810) is grounded;
> a second end of the operational amplifier (283) is connected to a first end of the fifth resistor (2812), a third end of the operational amplifier (283) is connected to a second end of the fifth resistor (2812), the second end of the fifth resistor (2812) is connected to a first end of the fourth resistor (2811), a second end of the fourth resistor (2811) is grounded, and the second end of the operational amplifier (283) is connected to the analog-digital acquisition unit (29).

10. The monitoring device according to any one of claims 1 to 9, wherein the motor (26) is a DC brushless motor.

11. The monitoring device according to any one of claims 1 to 9, wherein a rotor of the motor (26) is a permanent magnet, and a magnet holder (4) and a steel magnet (5) are located at a bottom of the motor (26).

12. The monitoring device according to claim 11, wherein the magnetic encoder chip (27) is installed on the PCB with a gap between the magnetic encoder chip (27) and the steel magnet (5).

13. The monitoring device according to any one of claims 1 to 9, wherein the monitoring device further comprises a heat radiator;
the driving circuit (25) is mounted on the PCB and connected to the heat radiator.

**Patentansprüche**

1. Überwachungsvorrichtung, aufweisend einen Sensor (21) für physikalische Parameter, einen Plattformchip (22), eine Steuerung (23), einen Einzelchip (24), eine Ansteuerschaltung (25), einen Motor (26) und einen magnetischen Codierungschip (27);

> wobei der Plattformchip (22) dafür ausgelegt ist, einen Bewegungsbefehl an den Motor (26) zu senden;
> der Motor (26) dafür ausgelegt ist, sich gemäß dem Bewegungsbefehl zu drehen und einen Körper der Überwachungsvorrichtung in Drehung zu versetzen;

der Sensor (21) für physikalische Parameter dafür ausgelegt ist, einen ersten physikalischen Parameter des Körpers der Überwachungsvorrichtung zu erhalten und den ersten physikalischen Parameter an den Plattformchip (22) zu senden;

der Plattformchip (22) darüber hinaus dafür ausgelegt ist, den ersten physikalischen Parameter an die Steuerung (23) zu senden;

der magnetische Codierungschip (27) dafür ausgelegt ist, einen zweiten physikalischen Parameter des Motors (26) zu erhalten und den zweiten physikalischen Parameter an die Steuerung (23) zu senden;

die Steuerung (23) dafür ausgelegt ist, eine Ansteuerspannung des Motors (26) zu bestimmen und einen Steuerungsbefehl zu erzeugen, wenn eine Abweichung zwischen dem ersten physikalischen Parameter und zweiten physikalischen Parameter größer als ein vorgegebener Schwellenwert ist, wobei der Steuerungsbefehl die Anweisung gibt, dass der Motor (26) mit der Ansteuerspannung angesteuert werden sollte; und den Steuerungsbefehl an den Einzelchip (24) zu senden;

der Einzelchip (24) dafür ausgelegt ist, ein Ansteuersignal gemäß dem Steuerungsbefehl zu erzeugen und das Ansteuersignal an die Ansteuerschaltung (25) zu senden, wobei das Ansteuersignal die Anweisung gibt, dass der Motor (26) mit der Ansteuerspannung angesteuert werden sollte;

die Ansteuerschaltung (25) dafür ausgelegt ist, die Ansteuerspannung gemäß dem Ansteuersignal zur Ansteuerung des Motors (26) auszugeben;

wobei die Steuerung (23) eine Proportions-Integrations-Differentiations- bzw. PID-Steuerung ist;

**dadurch gekennzeichnet, dass** die PID Steuerung einen ersten Proportionalregler (231), einen Integral-Differenzial-Regler (232), eine erste Filterschaltung (233), einen Spannungs-Raumvektor-Impulsbreitenmodulator (234), einen Funktionsgenerator (235), einen zweiten Proportionalregler (236), einen Integralregler (237), eine zweite Filterschaltung (238) und eine Stromdetektionsschaltung (239) aufweist;

ein erstes Ende des ersten Proportionalreglers (231) mit dem magnetischen Codierungschip (27) verbunden ist, ein zweites Ende des ersten Proportionalreglers (231) mit einem ersten Ende des Integral-Differenzial-Reglers (232) verbunden ist, und ein zweites Ende des Integral-Differenzial-Reglers (232) mit einem ersten Ende der ersten Filterschaltung (233) verbunden ist;

ein erstes Ende des Funktionsgenerators (235) mit dem magnetischen Codierungschip (27) verbunden ist, ein zweites Ende des Funktionsgenerators (235) mit einem ersten Ende des zweiten Proportionalreglers (236) verbunden ist, ein zweites Ende des zweiten Proportionalreglers (236) mit einem ersten Ende des Integralreglers (237) verbunden ist, und ein zweites Ende des Integralreglers (237) mit einem zweiten Ende der ersten Filterschaltung (233) verbunden ist;

ein erstes Ende der Stromdetektionsschaltung (239) mit dem Motor (26) verbunden ist, ein zweites Ende der Stromdetektionsschaltung (239) mit einem ersten Ende der zweiten Filterschaltung (238) verbunden ist, ein zweites Ende der zweiten Filterschaltung (238) mit dem magnetischen Codierungschip (27) verbunden ist, ein drittes Ende der zweiten Filterschaltung (238) mit dem ersten Ende des Integral-Differenzial-Reglers (232) verbunden ist und ein viertes Ende der zweiten Filterschaltung (238) mit dem ersten Ende des zweiten Proportionalreglers (236) verbunden ist;

ein drittes Ende der ersten Filterschaltung (233) mit einem ersten Ende des Spannungs-Raumvektor-Impulsbreitenmodulators (234) verbunden ist und ein zweites Ende des Spannungs-Raumvektor-Impulsbreitenmodulators (234) mit dem Einzelchip (24) verbunden ist.

2. Überwachungsvorrichtung nach Anspruch 1, wobei die Steuerung (23) insbesondere ausgelegt ist zum:

Umwandeln des zweiten physikalischen Parameters in einen dritten physikalischen Parameter des Körpers der Überwachungsvorrichtung gemäß einer Umwandlungsbeziehung zwischen einem physikalischen Parameter des Körpers der Überwachungsvorrichtung und einem physikalischen Parameter des Motors (26);

Vergleichen des ersten physikalischen Parameters mit dem dritten physikalischen Parameter;

wenn eine Abweichung zwischen dem ersten physikalischen Parameter und dritten physikalischen Parameter größer oder gleich einem vorgegebenen Schwellenwert ist, Bestimmen der Ansteuerspannung des Motors (26), Erzeugen eines Steuerungsbefehls und Senden des Steuerungsbefehls an den Einzelchip (24).

3. Überwachungsvorrichtung nach Anspruch 2, wobei der Sensor (21) für physikalische Parameter einen Positionssensor und/oder einen Drehzahlsensor aufweist; wobei der erste physikalische Parameter und der zweite physikalische Parameter Positionsinformationen und/oder Drehzahlinformationen aufweisen;

der Positionssensor dafür ausgelegt ist, Positionsinformationen des Körpers der Überwachungsvorrichtung in Echtzeit zu erhalten und die Positionsinformationen des Körpers der Überwachungsvorrichtung an die Steuerung (23) weiterzuleiten;

der Drehzahlsensor dafür ausgelegt ist, Drehzahlinformationen des Körpers der Überwachungsvorrichtung in Echtzeit zu erhalten und die Drehzahlinformationen des Körpers der Überwachungsvorrichtung an die Steuerung (23) weiterzuleiten;

der magnetische Codierungschip (27) insbesondere dafür ausgelegt ist, Positionsinformationen und Drehzahlinformationen des Motors (26) während einer entsprechenden Drehung des Motors (26) zu erhalten und die Positionsinformationen und Drehzahlinformationen des Motors (26) an die Steuerung (23) weiterzuleiten;

die Steuerung (23) insbesondere dafür ausgelegt ist, eine erste Differenz zwischen den Positionsinformationen des Körpers der Überwachungsvorrichtung und den Positionsinformationen des Motors (26) zu berechnen; eine zweite Differenz zwischen den Drehzahlinformationen des Körpers der Überwachungsvorrichtung und den Drehzahlinformationen des Motors (26) zu berechnen; wenn die erste Differenz einen vorgegebenen Positionsschwellenwert überschreitet oder die zweite Differenz einen vorgegebenen Drehzahlschwellenwert überschreitet, einen Proportionalvorgang an den Positionsinformationen und den Drehzahlinformationen des Motors (26) vorzunehmen, um eine Proportionalverstärkung zu erhalten, bei der eine Differenz zwischen den Positionsinformationen des Motors (26) und den Positionsinformationen des Körpers der Überwachungsvorrichtung kleiner ist als der vorgegebene Positionsschwellenwert und eine Differenz zwischen den Drehzahlinformationen des Motors (26) und den Drehzahlinformationen des Körpers der Überwachungsvorrichtung kleiner ist als der vorgegebene Drehzahlschwellenwert; einen Differenzial- und Integralvorgang an den Positionsinformationen und den Drehzahlinformationen des Motors (26) vorzunehmen, um eine Differenzial-Integralverstärkung zu erhalten, wobei bei der Proportionalverstärkung und der Differenzial-Integralverstärkung die Differenz zwischen den Positionsinformationen des Motors (26) und den Positionsinformationen des Körpers der Überwachungsvorrichtung Null beträgt und die Differenz zwischen den Drehzahlinformationen des Motors (26) und den Drehzahlinformationen des Körpers der Überwachungsvorrichtung Null beträgt; und einen neuen Steuerungsbefehl gemäß der Proportionalverstärkung und der Differenzial-Integralverstärkung zu erzeugen.

4.  Überwachungsvorrichtung nach Anspruch 3, wobei der Plattformchip (22) über einen seriellen Peripherie-Schnittstellenbus mit dem Positionssensor und dem Drehzahlsensor verbunden ist;

der Plattformchip (22) mit dem Positionssensor durch einen Chipauswahl-Pin und mit dem Drehzahlsensor durch einen anderen Chipauswahl-Pin verbunden ist.

5.  Überwachungsvorrichtung nach Anspruch 3, wobei die Genauigkeit einer vom Positionssensor zurückgemeldeten Position 0,04° erreicht und der Positionssensor sowie der Drehzahlsensor auf einer PCB bzw. Leiterplatte integriert sind.

6.  Überwachungsvorrichtung nach Anspruch 1, wobei der erste Proportionalregler (231) und zweite Proportionalregler (236) eine erste Proportionalverstärkung Y_Kp unter Verwendung der folgenden Formel bestimmen:

$$Y\_Kp=0,18*Ts*spd\_cont*gain\_ad*J;$$

wobei der Integral-Differenzial-Regler (232) eine erste Differentialverstärkung Y_Kd und eine erste Integralverstärkung Y_Ki unter Verwendung der folgenden Formeln bestimmt:

$$Y\_Ki=S+2\pi*fz1/S+2\pi*fp1$$

$$Y\_Kd=S+2\pi fz2/S+2\pi*fp2;$$

wobei Ts eine Schaltperiode des Motors (26), spd_cont eine Drehzahlkonstante des Motors (26), gain_ad eine Trägheitskonstante des Motors (26), J ein Trägheitsmoment des Motors (26), S eine Position des Motors (26) darstellt, fz1, fp1, fz2 und fp2 eine Drehfrequenz des Motors (26) darstellen, und ein Wertebereich von fz1 von 0,2Hz bis 2Hz reicht, ein Wertebereich von fp1 von 100 bis 200*fz1 reicht, ein Wertebereich von fz2 gleich 1/100fp1 ist und ein Wertebereich von fp2 von 200 bis 500*fz2 reicht.

7.  Überwachungsvorrichtung nach Anspruch 1, wobei die Stromdetektionsschaltung (239) eine zweite Proportionalverstärkung Current_Kp unter Verwendung der folgenden Formel bestimmt:

$$Current\_Kp=(51,2/\sqrt{3}*Vin)*(Lp/gain\_ad);$$

wobei die Stromdetektionsschaltung (239) eine zweite Integralverstärkung Current_Ki unter Verwendung der folgenden Formel bestimmt:

$$Current\_Ki=(819,2/\sqrt{3}*Vin)*(Rs*Ts/gain\_ad);$$

wobei Vin eine Eingangsspannung des Motors (26), Lp eine Induktanz des Motors (26), gain_ad eine Trägheitskonstante des Motors (26), Rs einen Innenwiderstand des Motors (26) und Ts eine Schaltperiode des Motors (26) darstellt.

8. Überwachungsvorrichtung nach Anspruch 1, wobei die Überwachungsvorrichtung darüber hinaus eine Stromabtastschaltung (28) und eine analog-digitale Erfassungsschaltung (29) aufweist;

die Stromabtastschaltung (28) dafür ausgelegt ist, einen Abtaststrom zu erfassen, der vom Motor (26) abgegeben wird, den Abtaststrom in eine Abtastspannung umzuwandeln und die Abtastspannung an die Steuerung (23) zu senden;
die analog-digitale Erfassungsschaltung (29) dafür ausgelegt ist, die Abtastspannung zu erfassen, die von der Stromabtastschaltung (28) ausgegeben wird, und die erfasste Abtastspannung an die Steuerung (23) zu senden;
die Steuerung (23) darüber hinaus dafür ausgelegt ist, die Ansteuerspannung gemäß der Abtastspannung einzustellen.

9. Überwachungsvorrichtung nach Anspruch 8, wobei die Stromabtastschaltung (28) einen ersten Widerstand (281), einen Differentialverstärker (282), einen Operationsverstärker (283), einen zweiten Widerstand (284), einen dritte Widerstand (285), einen ersten Kondensator (286), einen zweiten Kondensator (287), einen dritten Kondensator (288), einen vierten Kondensator (289), einen fünften Kondensator (2810), einen vierten Widerstand (2811) und einen fünften Widerstand (2812) aufweist;

ein erstes Ende des ersten Widerstands (281) mit dem Motor (26) und einem ersten Ende des Differentialverstärkers (282) verbunden ist, und ein zweites Ende des ersten Widerstands (281) mit einem zweiten Ende des Differentialverstärkers (282) verbunden ist;
ein erstes Ende des ersten Kondensators (286) auf Masse gelegt ist, ein zweites Ende des ersten Kondensators (286) mit dem ersten Ende des Differentialverstärkers (282) verbunden ist, ein erstes Ende des zweiten Kondensators (287) mit dem ersten Ende des Differentialverstärkers (282) verbunden ist, ein zweites Ende des zweiten Kondensators (287) mit dem zweiten Ende des Differentialverstärkers (282) verbunden ist, ein erstes Ende des dritten Kondensators (288) auf Masse gelegt ist und ein zweites Ende des dritten Kondensator (288) mit dem zweiten Ende des Differentialverstärkers (282) verbunden ist;
ein drittes Ende des Differentialverstärkers (282) auf Masse gelegt ist, ein viertes und ein fünftes Ende des Differentialverstärkers (282) mit einem ersten Ende des zweiten Widerstands (284) verbunden sind, ein zweites Ende des zweiten Widerstands (284) mit einem ersten Ende des dritten Widerstands (285) verbunden ist und ein zweites Ende des dritten Widerstands (285) mit einem ersten Ende des Operationsverstärkers (283) verbunden ist;
ein erstes Ende des vierten Kondensators (289) mit dem ersten Ende des dritten Widerstands (285) verbunden ist, ein zweites Ende des vierten Kondensators (289) auf Masse gelegt ist, ein erstes Ende des fünften Kondensators (2810) mit dem ersten Ende des Operationsverstärkers (283) verbunden ist und ein zweites Ende des fünften Kondensators (2810) auf Masse gelegt ist;
ein zweites Ende des Operationsverstärkers (283) mit einem ersten Ende des fünften Widerstands (2812) verbunden ist, ein drittes Ende des Operationsverstärkers (283) mit einem zweiten Ende des fünften Widerstands (2812) verbunden ist, das zweite Ende des fünften Widerstands (2812) mit einem ersten Ende des vierten Widerstands (2811) verbunden ist, ein zweites Ende des vierten Widerstands (2811) auf Masse gelegt ist und das zweite Ende des Operationsverstärkers (283) mit der analog-digitalen Erfassungsschaltung (29) verbunden ist.

10. Überwachungsvorrichtung nach einem der Ansprüche 1 bis 9, wobei der Motor (26) ein bürstenloser Gleichstrommotor ist.

**11.** Überwachungsvorrichtung nach einem der Ansprüche 1 bis 9, wobei ein Rotor des Motors (26) ein Permanentmagnet ist und ein Magnethalter (4) und ein Stahlmagnet (5) sich an einem Boden des Motors (26) befinden.

**12.** Überwachungsvorrichtung nach Anspruch 11, wobei der magnetische Codierungschip (27) auf der PCB mit einem Spalt zwischen dem magnetischen Codierungschip (27) und dem Stahlmagnet (5) installiert ist.

**13.** Überwachungsvorrichtung nach einem der Ansprüche 1 bis 9, wobei die Überwachungsvorrichtung darüber hinaus einen Wärmestrahler aufweist;
wobei die Ansteuerschaltung (25) auf der PCB montiert und mit dem Wärmestrahler verbunden ist.

**Revendications**

**1.** Dispositif de surveillance comprenant un capteur de paramètres physiques (21), une puce de plate-forme (22), un contrôleur (23), une puce unique (24), un circuit de commande (25), un moteur (26) et une puce de codage magnétique (27) ;

la puce de plate-forme (22) étant adaptée pour envoyer une commande de mouvement au moteur (26) ;
le moteur (26) étant adapté pour tourner selon la commande de mouvement et pour entraîner en rotation un corps du dispositif de surveillance ;
le capteur de paramètres physiques (21) étant adapté pour obtenir un premier paramètre physique du corps du dispositif de surveillance et pour envoyer le premier paramètre physique à la puce de plate-forme (22) ;
la puce de plate-forme (22) étant en outre adaptée pour envoyer le premier paramètre physique au contrôleur (23) ;
la puce de codage magnétique (27) étant adaptée pour obtenir un deuxième paramètre physique du moteur (26) et pour envoyer le deuxième paramètre physique au contrôleur (23) ;
le contrôleur (23) étant adapté pour déterminer une tension de commande du moteur (26) et pour générer une instruction de commande lorsqu'un écart entre le premier paramètre physique et le deuxième paramètre physique est supérieur à une valeur seuil prédéterminée, l'instruction de commande donnant l'instruction que le moteur (26) doit être commandé avec la tension de commande ; et pour envoyer l'instruction de commande à la puce unique (24) ;
la puce unique (24) étant adaptée pour générer un signal de commande conformément à l'instruction de commande et pour envoyer le signal de commande au circuit de commande (25), le signal de commande donnant l'instruction que le moteur (26) doit être commandé avec la tension de commande ;
le circuit de commande (25) étant adapté pour délivrer la tension de commande conformément au signal de commande pour commander le moteur (26) ;
le contrôleur (23) étant un contrôleur PID, Proportion-Intégration-Différenciation ;
**caractérisé en ce que** le contrôleur PID comprend un premier régulateur proportionnel (231), un régulateur intégral-différentiel (232), un premier circuit de filtrage (233), un modulateur de largeur d'impulsion à vecteur spatial de tension (234), un générateur de fonction (235), un deuxième régulateur proportionnel (236), un régulateur intégral (237), un deuxième circuit de filtrage (238) et un circuit de détection de courant (239) ;
une première extrémité du premier régulateur proportionnel (231) est connectée à la puce de codage magnétique (27), une deuxième extrémité du premier régulateur proportionnel (231) est connectée à une première extrémité du régulateur intégral-différentiel (232), et une deuxième extrémité du régulateur intégral-différentiel (232) est connectée à une première extrémité du premier circuit de filtrage (233) ;
une première extrémité du générateur de fonction (235) est connectée à la puce de codage magnétique (27), une deuxième extrémité du générateur de fonction (235) est connectée à une première extrémité du deuxième régulateur proportionnel (236), une deuxième extrémité du deuxième régulateur proportionnel (236) est connectée à une première extrémité du régulateur intégral (237), et une deuxième extrémité du régulateur intégral (237) est connectée à une deuxième extrémité du premier circuit de filtrage (233) ;
une première extrémité du circuit de détection de courant (239) est connectée au moteur (26), une deuxième extrémité du circuit de détection de courant (239) est connectée à une première extrémité du deuxième circuit de filtrage (238), une deuxième extrémité du deuxième circuit de filtrage (238) est connectée à la puce de codage magnétique (27), une troisième extrémité du deuxième circuit de filtrage (238) est connectée à la première extrémité du régulateur intégral-différentiel (232), et une quatrième extrémité du deuxième circuit de filtrage (238) est connectée à la première extrémité du deuxième régulateur proportionnel (236) ;
une troisième extrémité du premier circuit de filtrage (233) est connectée à une première extrémité du modulateur de largeur d'impulsion à vecteur spatial de tension (234), et une deuxième extrémité du modulateur de largeur d'impulsion à vecteur spatial de tension (234) est connectée à la puce unique (24).

2. Le dispositif de surveillance selon la revendication 1, sachant que le contrôleur (23) est notamment adapté pour :

convertir le deuxième paramètre physique en un troisième paramètre physique du corps du dispositif de surveillance selon une relation de conversion entre un paramètre physique du corps du dispositif de surveillance et un paramètre physique du moteur (26) ;
comparer le premier paramètre physique avec le troisième paramètre physique ;
lorsqu'un écart entre le premier paramètre physique et le troisième paramètre physique est supérieur ou égal à une valeur seuil prédéterminée, déterminer la tension de commande du moteur (26), générer une instruction de commande et envoyer l'instruction de commande à la puce unique (24).

3. Le dispositif de surveillance selon la revendication 2, sachant que le capteur de paramètres physiques (21) comprend un capteur de position et/ou un capteur de vitesse de rotation ; le premier paramètre physique et le deuxième paramètre physique comprennent des informations de position et/ou des informations de vitesse de rotation ;

le capteur de position est adapté pour obtenir des informations de position du corps du dispositif de surveillance en temps réel et pour transmettre les informations de position du corps du dispositif de surveillance au contrôleur (23) ;
le capteur de vitesse de rotation est adapté pour obtenir des informations de vitesse de rotation du corps du dispositif de surveillance en temps réel et pour transmettre les informations de vitesse de rotation du corps du dispositif de surveillance au contrôleur (23) ;
la puce de codage magnétique (27) est notamment adaptée pour obtenir des informations de position et de vitesse de rotation du moteur (26) pendant une rotation correspondante du moteur (26) et pour transmettre les informations de position et de vitesse de rotation du moteur (26) au contrôleur (23) ;
le contrôleur (23) est notamment adapté pour calculer une première différence entre les informations de position du corps du dispositif de surveillance et les informations de position du moteur (26) ; pour calculer une deuxième différence entre les informations de vitesse de rotation du corps du dispositif de surveillance et les informations de vitesse de rotation du moteur (26) ; lorsque la première différence dépasse une valeur seuil de position prédéterminée ou lorsque la deuxième différence dépasse une valeur seuil de vitesse de rotation prédéterminée, effectuer une opération proportionnelle sur les informations de position et les informations de vitesse de rotation du moteur (26) afin d'obtenir un gain proportionnel pour lequel une différence entre les informations de position du moteur (26) et les informations de position du corps du dispositif de surveillance est inférieure à la valeur seuil de position prédéterminée et une différence entre les informations de vitesse de rotation du moteur (26) et les informations de vitesse de rotation du corps du dispositif de surveillance est inférieure à la valeur seuil de vitesse prédéterminée ; pour effectuer une opération différentielle et intégrale sur les informations de position et les informations de vitesse de rotation du moteur (26) afin d'obtenir un gain différentiel et intégral, sachant que, avec le gain proportionnel et le gain différentiel et intégral, la différence entre les informations de position du moteur (26) et les informations de position du corps du dispositif de surveillance est nulle et la différence entre les informations de vitesse de rotation du moteur (26) et les informations de vitesse de rotation du corps du dispositif de surveillance est nulle ; et pour générer une nouvelle instruction de commande selon le gain proportionnel et le gain différentiel et intégral.

4. Le dispositif de surveillance selon la revendication 3, sachant que la puce de plate-forme (22) est connectée au capteur de position et au capteur de vitesse de rotation par un bus d'interface sériel périphérique ;
la puce de plate-forme (22) est connectée au capteur de position par une broche de sélection de puce et au capteur de vitesse de rotation par une autre broche de sélection de puce.

5. Le dispositif de surveillance selon la revendication 3, sachant que la précision d'une position renvoyée par le capteur de position atteint 0,04° et le capteur de position ainsi que le capteur de vitesse de rotation sont intégrés sur une PCB (carte de circuit imprimé).

6. Le dispositif de surveillance selon la revendication 1, sachant que le premier régulateur proportionnel (231) et le deuxième régulateur proportionnel (236) déterminent un premier gain proportionnel Y_Kp en utilisant la formule suivante :

$$Y\_Kp = 0,18 * Ts * spd\_cont * gain\_ad * J \ ;$$

sachant que le régulateur intégral-différentiel (232) détermine un premier gain différentiel Y_Kd et un premier gain intégral Y_Ki en utilisant les formules suivantes :

$$Y\_Ki=S+2\pi*fz1/S+2\pi*fp1$$

$$Y\_Kd=S+2\pi fz2/S+2\pi*fp2 \ ;$$

où Ts représente une période de commutation du moteur (26), spd_cont une constante de vitesse du moteur (26), gain_ad une constante d'inertie du moteur (26), J un moment d'inertie du moteur (26), S une position du moteur (26), fz1, fp1, fz2 et fp2 représentent une fréquence de rotation du moteur (26), et une plage de valeurs de fz1 est comprise entre 0,2Hz et 2Hz, une plage de valeurs de fp1 est comprise entre 100 et 200*fz1, une plage de valeurs de fz2 est égale à 1/100fp1 et une plage de valeurs de fp2 est comprise entre 200 et 500*fz2.

7. Le dispositif de surveillance selon la revendication 1, sachant que le circuit de détection de courant (239) détermine un deuxième gain proportionnel Current_Kp en utilisant la formule suivante :

$$Current\_Kp=(51,2/\sqrt{3}*Vin)*(Lp/gain\_ad) \ ;$$

sachant que le circuit de détection de courant (239) détermine un deuxième gain intégral Current_Ki en utilisant la formule suivante :

$$Current\_Ki=(819,2/\sqrt{3}*Vin)*(Rs*Ts/gain\_ad) \ ;$$

où Vin représente une tension d'entrée du moteur (26), Lp une inductance du moteur (26), gain_ad une constante d'inertie du moteur (26), Rs une résistance interne du moteur (26) et Ts une période de commutation du moteur (26).

8. Le dispositif de surveillance selon la revendication 1, sachant que le dispositif de surveillance comprend en outre un circuit d'échantillonnage courant (28) et un circuit de détection analogique-numérique (29) ;

le circuit d'échantillonnage courant (28) étant adapté pour détecter un courant d'échantillonnage délivré par le moteur (26), pour convertir le courant d'échantillonnage en une tension d'échantillonnage et pour envoyer la tension d'échantillonnage au contrôleur (23) ;
le circuit de détection analogique-numérique (29) étant adapté pour détecter la tension d'échantillonnage délivrée par le circuit d'échantillonnage de courant (28) et pour envoyer la tension d'échantillonnage détectée au contrôleur (23) ;
le contrôleur (23) étant en outre adapté pour ajuster la tension de commande en fonction de la tension d'échantillonnage.

9. Le dispositif de surveillance selon la revendication 8, sachant que le circuit d'échantillonnage courant (28) comprend une première résistance (281), un amplificateur différentiel (282), un amplificateur opérationnel (283), une deuxième résistance (284), une troisième résistance (285), un premier condensateur (286), un deuxième condensateur (287), un troisième condensateur (288), un quatrième condensateur (289), un cinquième condensateur (2810), une quatrième résistance (2811) et une cinquième résistance (2812) ;

une première extrémité de la première résistance (281) est connectée au moteur (26) et à une première extrémité de l'amplificateur différentiel (282), et une deuxième extrémité de la première résistance (281) est connectée à une deuxième extrémité de l'amplificateur différentiel (282) ;
une première extrémité du premier condensateur (286) est mise à la masse, une deuxième extrémité du premier condensateur (286) est connectée à la première extrémité de l'amplificateur différentiel (282), une première extrémité du deuxième condensateur (287) est connectée à la première extrémité de l'amplificateur différentiel (282), une deuxième extrémité du deuxième condensateur (287) est connectée à la deuxième extrémité de l'amplificateur différentiel (282), une première extrémité du troisième condensateur (288) est mise à la masse, et une deuxième extrémité du troisième condensateur (288) est connectée à la deuxième extrémité de l'amplificateur différentiel (282) ;
une troisième extrémité de l'amplificateur différentiel (282) est mise à la masse, une quatrième et une cinquième extrémités de l'amplificateur différentiel (282) sont connectées à une première extrémité de la deuxième résistance (284), une deuxième extrémité de la deuxième résistance (284) est connectée à une première extrémité de la troisième résistance (285), et une deuxième extrémité de la troisième résistance (285) est connectée à une première extrémité de l'amplificateur opérationnel (283) ;
une première extrémité du quatrième condensateur (289) est connectée à la première extrémité de la troisième résistance (285), une deuxième extrémité du quatrième condensateur (289) est mise à la masse, une première extrémité du cinquième condensateur (2810) est connectée à la première extrémité de l'amplificateur opérationnel (283), et une deuxième extrémité du cinquième condensateur (2810) est mise à la masse ;
une deuxième extrémité de l'amplificateur opérationnel (283) est connectée à une première extrémité de la cinquième résistance (2812), une troisième extrémité de l'amplificateur opérationnel (283) est connectée à une deuxième extrémité de la cinquième résistance (2812), la deuxième extrémité de la cinquième résistance (2812) est connectée à une première extrémité de la quatrième résistance (2811), une deuxième extrémité de la quatrième résistance (2811) est mise à la masse, et la deuxième extrémité de l'amplificateur opérationnel (283) est connectée au circuit de détection analogique-numérique (29).

10. Le dispositif de surveillance selon l'une des revendications 1 à 9, sachant que le moteur (26) est un moteur à courant continu sans balai.

11. Le dispositif de surveillance selon l'une des revendications 1 à 9, sachant qu'un rotor du moteur (26) est un aimant permanent et un support d'aimant (4) et un aimant en acier (5) sont situés sur un fond du moteur (26).

12. Le dispositif de surveillance selon la revendication 11, sachant que la puce de codage magnétique (27) est installée sur le PCB avec un espace entre la puce de codage magnétique (27) et l'aimant en acier (5).

13. Le dispositif de surveillance selon l'une des revendications 1 à 9, sachant que le dispositif de surveillance comprend en outre un émetteur de chaleur ;
le circuit de commande (25) étant monté sur la PCB et connecté à l'émetteur de chaleur.

Fig. 1

Fig. 2

Fig. 3

41

selecting the platform chip as a master and the position sensor and the speed sensor as slaves

42

providing SPI bus interfaces on the master and two slaves, and connecting the master and The slaves via SPI bus interfaces

43

providing on the master two chip select control interfaces that are connected to the two slaves respectively, wherein the time division multiplexing communications between the master and the slaves are realized through the chip select control signal sent by the master

Fig.4

24 singlechip    25 driving circuit

21 physical parameter sensor    22 platform chip    23 controller    29 analog-digital acquisition unit    28 current sampling circuit    26 motor

27 magnetic encoder chip

Fig.5

24 singlechip
PWM A
PWM B
PWM C
PHASE A
PHASE B
PHASE C

25 driving circuit
OUT A
OUT B
OUT C

USART_RXD
USART_TXD

23 controller
I2C_SDA
I2C_SCK

29 analog-digital acquisition unit
Ua
Ub
Uc

28 current sampling circuit
Ia
Ib
Ic

26 motor

SPI2_MISO
SPI2_MOSI
SPI2_CLK
CS

27 magnetic encoder chip

Fig.6

Fig.7

Fig.8

Fig.9

Fig.10

Fig.11

Fig.12

Fig.13

**EP 4 113 824 B1**

**REFERENCES CITED IN THE DESCRIPTION**

**Patent documents cited in the description**

- CN 202010113707
- US 2019323469 A1
- CN 101571723 B
- CN 107040170 A
- CN 101577519 A
- US 10505482 B2
- JP 2014121717 A
- JP H11272335 A
- CA 2631299 C